# FASCICULE DE BREVET EUROPEEN

(11) **EP 0 774 892 B1**
(45) Date de publication et mention de la délivrance du brevet: **21.10.1998**
(21) Numéro de dépôt: 95927784.9
(22) Date de dépôt: 11.08.1995
(51) Int. Cl.: A01G 1/04

(54) **GOBETAGE POUR LA CULTURE DE CHAMPIGNONS, SON PROCEDE DE PREPARATION ET PROCEDE DE CULTURE DE CHAMPIGNONS**
DECKSCHICHT FÜR DIE PILZZUCHT, IHR HERSTELLUNGSVERFAHREN UND PILZZUCHTVERFAHREN
MINERAL CASING FOR MUSHROOM CULTIVATION, METHOD FOR PREPARING SAME AND MUSHROOM CULTIVATION METHOD

(30) Priorité: 12.08.1994 FR 9410007
(43) Date de publication de la demande: 28.05.1997
(73) Titulaire: S.A. ROYAL CHAMPIGNON, 49400 Saumur (FR)
(72) Inventeur: GESLIN, Bernard, F-49250 Beaufort-en-Vallée (FR)
(74) Mandataire: Ahner, Francis
(86) Numéro de dépôt international: FR9501081
(87) Numéro de publication internationale: WO9604777

(56) Documents cités:
- WO-A-88/01472
- WO-A-92/00663
- DE-U- 8 703 030
- FR-A- 2 549 346
- FR-A- 2 550 913
- FR-A- 2 603 767
- FR-A- 2 676 158
- DATABASE WPI Week 8614, Derwent Publications Ltd., London, GB; AN 86-090535 [14] & JP,A,61 035 722 (YG COMPEX)

## Description

La présente invention concerne la culture des champignons, notamment la culture des champignons de couche Agaricus bisporus, et plus particulièrement un nouveau gobetage destiné en particulier, à assurer une amélioration de la récolte des champignons de couche. Cette amélioration se traduit principalement par une beaucoup plus grande facilité de mise en oeuvre de la récolte dont la vitesse peut ainsi être multipliée par cinq comparativement aux techniques traditionnelles.

De surcroît, la présente invention permet la récolte directe de champignons ne présentant plus aucun résidu de gobetage à la base de leur pied.

La culture des champignons de couche Agaricus bisporus repose à la fois sur un ensemble de traditions lointaines, notamment pour ce qui concerne le compost, son ensemencement et les conditions de culture et d'améliorations plus récentes, notamment dans la réalisation de gobetages conçus pour faciliter la récolte des champignons.

En général, la culture des champignons de couche est effectuée sur un milieu de culture comprenant une première couche ou compost, ensemencée en mycélium, servant de réserve d'eau et de milieu de culture pour le champignon, mais très propice aux contaminations aériennes par des compétiteurs (autres champignons, bactéries). Traditionnellement la couche de compost est recouverte par une couche de terre de gobetage qui peut être simple ou double.

D'une manière usuelle, le gobetage est réalisé dans des matériaux bon marché, dont la nature dépendra des régions de productions, tenant compte notamment des traditions locales de culture et de la disponibilité desdits matériaux. Il s'agit plus particulièrement de tuffeaux de tourbes, de drèches de brasserie, de sables, d'argiles, de maerl, etc.

Ces gobetages traditionnels présentent toutefois l'inconvénient d'être sous une forme pulvérulente ou granulaire, voire motteuse, ce qui rend nécessaire le nettoyage ultérieur des champignons et la coupe de l'extrémité inférieure de leur pied, d'où il résulte une perte d'une part de la récolte, qui peut atteindre 20% en masse.

Des développements plus récents des techniques de culture des champignons de couche avaient déjà pour objectif d'améliorer la mécanisation de leur récolte, en remplaçant le gobetage traditionnel par une nappe constituée de fibres naturelles ou synthétiques, tissées ou non (FR-A-2 676 158 et FR-A-2 603 767), ces techniques ayant conduit à d'importantes difficultés au niveau de la fructification.

Au surplus, de tels gobetages synthétiques permettaient certes d'envisager la mécanisation de la récolte des champignons de couche, mais présentaient des inconvénients, tels qu'une manipulation délicate des nappes, ou encore la nécessité de les traiter pour empêcher leur contamination par des compétiteurs, selon le matériau employé. Enfin, le recyclage de ce type de nappes n'était pas sérieusement envisageable.

La présente invention concerne donc un nouveau gobetage qui allie à la fois une grande simplicité de mise en oeuvre, un faible coût et une amélioration des procédés de récolte, tout en conservant un bon rendement de production des champignons de couche.

Le nouveau gobetage selon l'invention se caractérise en ce qu'il comprend une couche supérieure de matériau durci à base d'un liant hydraulique, notamment du plâtre.

Cette couche supérieure de gobetage est avantageusement appliquée à l'état liquide sur une couche inférieure de gobetage tourbée, puis laissée à sécher pour la durcir. Avant le durcissement complet de la couche supérieure de gobetage, ou après ce dernier, des espaces sont formés de manière à permettre le passage du mycélium pour arriver à la surface du gobetage selon l'invention, et le développement des champignons.

Les espaces sont avantageusement formés sous la forme de trous ou de sillons, espacés régulièrement ou non.

Les trous ont avantageusement un diamètre compris entre 2 et 5 mm environ, et sont de préférence espacés par un intervalle généralement très supérieur à leur diamètre. Ils sont de préférence répartis régulièrement selon un réseau déterminé.

De manière à favoriser la récolte des champignons, le gobetage selon l'invention aura de préférence une surface supérieure essentiellement lisse, le matériau à base de liant hydraulique est appliqué à l'état liquide sur la couche inférieure de gobetage, puis il est ensuite lissé selon les techniques usuelles de préparation d'enduits.

Selon un mode de mise en oeuvre particulier le lissage de la couche supérieure de gobetage s'effectue par application d'une feuille de matière thermoplastique, par exemple un film de polyéthylène, que l'on retire après durcissement total ou partiel du matériau à base de liant hydraulique.

De préférence, la formation du réseau de trous est réalisé après retrait de la feuille de lissage et après durcissement complet de la couche supérieure de gobetage.

Par contre, compte-tenu de l'irrégularité de la surface de la couche inférieure de gobetage tourbée sur laquelle on applique à l'état liquide le matériau à base de liant hydraulique, la couche de matériau durci selon l'invention n'aura généralement pas une face inférieure lisse, et en conséquence, son épaisseur sera variable. D'une manière avantageuse, l'épaisseur moyenne de la couche supérieure du gobetage selon l'invention est comprise entre 5 mm et 1 cm.

Tous les types de liants hydrauliques usuels disponibles dans le commerce, employés en particulier dans le bâtiment pour recouvrir des surfaces rugueuses, par exemple les plâtres pour la réalisation de moulages, se sont révélés efficaces pour la réalisation du nouveau gobetage selon l'invention.

De façon générale on entendra par matériau à base de liant hydraulique, tout produit résultant de la déshydratation partielle ou totale de matières premières minérales, tels que l'argile, le calcaire, la bauxite, les sels de calcium, en particulier le sulfate de calcium dihydraté naturel, ces liants étant éventuellement additionnés d'aggrégats légers, de sels durcisseurs, de modificateurs de vitesse de prise, de fibres minérales ou encore de composés chimiques générant un dégagement gazeux au moment de leur prise de façon à donner lieu à une structure expansée de préférence à pores fermés, ou encore tout autre matériau analogue durcissable après gâchage avec des proportions appropriées d'eau, et bien connu de l'homme du métier.

D'autres caractéristiques et avantages du gobetage selon l'invention apparaîtront à la lecture de l'exemple donné ci-après à simple titre d'illustration.

### EXEMPLE

La culture et la récolte de champignons de couche comprend les étapes suivantes, d'incubation du mycélium dans le compost, puis de préparation du gobetage et enfin la culture proprement dite avec fructification et croissance des carpophores avant leur récolte.

### 1. Incubation du mycélium

On effectue selon les méthodes usuelles, l'incubation du mycélium dans un bac de 25 cm de hauteur, rempli avec du compost ensemencé (variété hybride 216, commercialisée par la société ROYAL CHAMPIGNON), avec un taux de remplissage de 105 kg de compost par m².

Lorsque le mycélium a complètement envahi le compost, on procède alors au gobetage.

### 2. Préparation du gobetage

On réalise tout d'abord la couche inférieure de gobetage en répandant un mélange de tourbe et de tuffeau sur le compost envahi de mycélium résultant de l'étape précédente. On utilise de préférence un mélange relativement riche en eau, constitué par 60 à 80% en volume de tourbe et 20 à 40% en volume de tuffeau. Un tel mélange est étalé de manière à obtenir une couche inférieure de gobetage d'une épaisseur comprise entre 2 cm et 5 cm, de préférence de l'ordre de 3 cm. Cette première couche de gobetage contient en outre du mycélium de manière à favoriser la fructification à la surface libre du gobetage.

Si cela s'avère nécessaire, on ajuste le taux d'humidité de la couche inférieure à environ 50%.

D'une manière avantageuse, on peut également compléter la couche inférieure de gobetage tourbée en ajoutant à sa surface, un apport de mycélium sur grains de seigle.

On prépare ensuite la couche supérieure de gobetage en mélangeant de la poudre de plâtre fin (commercialisée sous la marque Cercle Rouge par la société LAMBERT) à un volume approprié d'eau, notamment selon un rapport de 1 volume d'eau pour 1,6 volume de plâtre. Bien entendu, le rapport volume d'eau / volume de plâtre dépendra de la qualité du plâtre employé, de la viscosité recherchée pour l'application de la couche de plâtre, et du temps de séchage recherché pour obtenir la couche de plâtre durcie. L'homme du métier saura se référer aux indications fournies par les fabricants de plâtre pour ajuster ces différents paramètres.

Le plâtre liquide est alors étalé sur la couche inférieure de gobetage préparée auparavant et lissé selon les techniques usuelles du métier, de manière à obtenir une couche de plâtre présentant une surface supérieure la plus lisse possible et une épaisseur comprise entre 5 mm et 1 cm.

La couche de plâtre est ensuite laissée à sécher pour durcir.

Avant le durcissement complet de ladite couche de plâtre, on réalise les espaces nécessaires au passage du mycélium en perçant régulièrement des trous de 3 mm de diamètre, espacés les un des autres d'une distance de 3 cm environ.

### 3. Culture et récolte des champignons

Après le durcissement complet de la couche de plâtre, le milieu de culture est laissé à incuber (post-incubation) afin que le mycélium envahisse également le gobetage selon l'invention.

La culture des champignons est réalisée selon les méthodes usuelles, à savoir fructification avec formation de primordia à la surface du plâtre et ensuite, croissance des carpophores.

On effectue une première récolte de champignons ouverts 22 jours après le gobetage, puis une deuxième récolte 30 jours après le gobetage et enfin une troisième récolte 41 jours après le gobetage.

Les champignons sont récoltés directement sans aucun résidu de gobetage et donc sans qu'il soit nécessaire d'avoir ultérieurement recours au nettoyage où à une coupe des pieds de champignons, comptetenu de l'absence totale d'impuretés sur ces derniers.

Le rendement final, après les trois volées de récolte est de 32 kg/m².

Après culture de champignons en employant le nouveau gobetage selon l'invention, on constatera les avantages suivants pour ce dernier :
- il est appliqué sur la couche inférieure à l'état liquide,
- il permet de ce fait une bonne continuité à son interface avec la couche inférieure, et permet ainsi la récolte de plusieurs volées successives homogènes,
- il est rigide et poreux à l'air et à l'eau au cours du cycle de culture,
- il est suffisamment souple pour suivre le substrat au cours du cycle lorsque celui-ci s'affaisse,
- il est peu coûteux et fait appel à des matériaux facilement disponibles,
- il peut être éventuellement recyclé après usage, et enfin,
- son impact sur l'environnement est très faible.

La cueille des champignons peut ainsi être réalisée par tout moyen approprié permettant d'exercer un léger effort à la base du pied des champignons qui se détachent ainsi très facilement et en préservant en outre 3 à 5 volées successives suivantes. Une telle récolte peut être effectuée de façon mécanisée ou non.

Bien entendu, le procédé décrit ci-dessus pour Agaricus bisporus s'adapte à toute autre variété de champignons de culture.

De même, la présente invention n'est pas limitée à l'association aux seules couches inférieures de gobetage tourbées usuelles, mais peut très bien s'adapter à toutes couches inférieures de gobetage et/ou de culture de champignons, notamment des couches modifiées, comprenant des additifs ou des feuilles intermédiaires absorbant l'humidité et servant de réserve d'eau pour le cycle de culture (FR-A-2 549 346, FR-A-2 550 913 et WO-A-88/01472).

## Revendications

1. Gobetage pour la culture de champignons, en particulier de champignons de couche Agaricus bisporus, caractérisé en ce qu'il comprend une couche supérieure de matériau durci à base de liant hydraulique, en particulier du plâtre, dans laquelle ont été formés des espaces nécessaires au passage du mycélium pour arriver à la surface dudit gobetage.

2. Gobetage selon la revendication 1, caractérisé en ce que les espaces sont formés sous la forme de trous ou de sillons.

3. Gobetage selon la revendication 2, caractérisé en ce que les trous ont un diamètre compris entre 2 mm et 5 mm.

4. Gobetage selon l'une des revendications 2 ou 3, caractérisé en ce que les trous sont régulièrement espacés selon un réseau déterminé, la distance les séparant étant très supérieure à leur diamètre.

5. Gobetage selon l'une des revendications 1 à 4, caractérisé en ce que la surface libre de la couche supérieure de matériau durci à base de liant hydraulique est essentiellement lisse.

6. Gobetage selon l'une des revendications 1 à 5, caractérisé en ce que ladite couche de matériau durci à base de liant hydraulique a une épaisseur comprise entre 5 mm et 1 cm.

7. Gobetage selon l'une des revendications 1 à 6, caractérisé en ce qu'il comprend une sous-couche inférieure de gobetage tourbée, avantageusement constituée par un mélange de 60 à 80% en volume de tourbe et de 20 à 40% en volume de tuffeau.

8. Gobetage selon la revendication 7, caractérisé en ce que ladite sous-couche inférieure de gobetage tourbée est ensemencée en mycélium et présente avantageusement à sa surface supérieure un apport additionnel de mycélium sur grains de seigle.

9. Procédé de préparation d'un gobetage selon l'une des revendications 1 à 8, caractérisé en ce que
- on mélange la poudre de liant hydraulique, en particulier de plâtre avec un volume approprié d'eau, puis
- on étale le liant hydraulique liquide obtenu sur une sous-couche inférieure de gobetage préalablement ensemencée en mycélium, puis
- le cas échéant on lisse la couche de liant hydraulique ainsi formée, puis
- on laisse sécher la couche de liant hydraulique pour la durcir, puis, enfin,
- on forme les espaces nécessaires, avant ou après le durcissement complet de la couche de liant hydraulique.

10. Procédé de culture et de récolte de champignons, en particulier de champignons de couche Agaricus bisporus, caractérisé en ce que
- on prépare une couche de compost de base ensemencée en mycélium
- on prépare une sous-couche inférieure de gobetage tourbée et ensemencée en mycélium, d'une épaisseur comprise entre 2 cm et 5 cm, de préférence voisine de 3 cm, que l'on dépose sur la couche de compost,
- on dispose sur la sous-couche inférieure de gobetage une couche supérieure de gobetage telle que définie à l'une des revendications 1 à 8 par le procédé selon la revendication 9,
- on laisse le milieu de culture obtenu incuber de manière que le mycélium envahisse le gobetage,
- on laisse fructifier avec formation de primordia à la surface du gobetage, puis on laisse croître les carpophores, et enfin,
- on récolte les champignons obtenus sans aucun résidu de gobetage.

## Claims

1. Casing for the cultivation of mushroom, in particular of the cultivated mushroom Agaricus bisporus, characterized in that it comprises a top layer of hardened material based on a hydraulic binder, in particular plaster, in which spaces have been formed which are necessary for the passage of the mycelium in order to arrive at the surface of the said casing.

2. Casing according to Claim 1, characterized in that the spaces are formed in the form of holes or furrows.

3. Casing according to Claim 2, characterized in that the holes have a diameter of between 2 mm and 5 mm.

4. Casing according to either of Claims 2 and 3, characterized in that the holes are evenly separated according to a defined network, the distance separating them being much greater than their diameter.

5. Casing according to one of Claims 1 to 4, characterized in that the free surface of the top layer of hydraulic binder-based hardened material is essentially smooth.

6. Casing according to one of Claims 1 to 5, characterized in that the said layer of hydraulic binder-based hardened material has a thickness of between 5 mm and 1 cm.

7. Casing according to one of Claims 1 to 6, characterized in that it comprises a bottom sublayer of peat-containing casing, advantageously consisting of a mixture of 60 to 80% by volume of peat and 20 to 40% by volume of calcareous tufa.

8. Casing according to Claim 7, characterized in that the said bottom sublayer of peat-containing casing is seeded with mycelium and has advantageously at its top surface an additional supply of mycelium on rye grains.

9. Process for the preparation of a casing according to one of Claims 1 to 8, characterized in that
- the hydraulic binder, in particular plaster, powder is mixed with an appropriate volume of water, then
- the liquid hydraulic binder obtained is spread over a bottom sublayer of casing previously seeded with mycelium, then
- where appropriate, the hydraulic binder layer thus formed is smoothened, then
- the hydraulic binder layer is allowed to dry so as to harden it, and then finally,
- the required spaces are formed, before or after the complete hardening of the hydraulic binder layer.

10. Process for the cultivation and harvesting of mushrooms, in particular of the cultivated mushroom Agaricus bisporus, characterized in that
- a base compost layer seeded with mycelium is prepared
- a bottom sublayer of peat-containing casing seeded with mycelium, having a thickness of between 2 cm and 5 cm, preferably of close to 3 cm, is prepared and deposited on the compost layer,
- a top layer of casing as defined in one of Claims 1 to 8 is placed on the bottom sublayer of casing by the process according to Claim 9,
- the cultivation medium obtained is left to incubate so that the mycelium invades the casing,
- fruiting is allowed to take place with the formation of primordia at the surface of the casing, then the carpophores are allowed to grow, and finally,
- the mushrooms obtained are harvested without any casing residue.

## Patentansprüche

1. Deckschicht für die Pilzzucht, insbesondere von Zuchtchampignons Agaricus bisporus, dadurch gekennzeichnet, daß sie eine obere Schicht aus hartem Material auf der Grundlage von hydraulischem Binder, insbesondere von Gips, umfaßt, in die man Räume eingeformt hat, die für die Passage des Myzels notwendig sind, um zur Oberfläche der Deckschicht zu gelangen.

2. Deckschicht nach Anspruch 1, dadurch gekennzeichnet, daß die Räume ausgebildet sind in der Form von Löchern oder Furchen.

3. Deckschicht nach Anspruch 2, dadurch gekennzeichnet, daß die Löcher einen Durchmesser aufweisen, der zwischen 2 mm und 5 mm enthalten ist.

4. Deckschicht nach einem der Ansprüche 2 oder 3, dadurch gekennzeichnet, daß die Löcher nach einem bestimmten Raster mit Zwischenräumen versehen sind, wobei die sie trennende Entfernung sehr viel größer ist als ihr Durchmesser.

5. Deckschicht nach einem der Ansprüche 1 bis 4, dadurch gekennzeichnet, daß die freie Oberfläche der oberen Schicht aus hartem Material auf der Grundlage von hydraulischem Binder im wesentlichen glatt ist.

6. Deckschicht nach einem der Ansprüche 1 bis 5, dadurch gekennzeichnet, daß die Deckschicht aus hartem Material auf der Grundlage von hydraulischem Binder eine Stärke aufweist, die zwischen 5 mm und 1 cm enthalten ist.

7. Deckschicht nach einem der Ansprüche 1 bis 6, dadurch gekennzeichnet, daß sie eine aus Torf gewonnene untere Unterdeckschicht umfaßt, die vorteilhafterweise aus einer Mischung aus 60-80 Vol.-% Torf und aus 20-40 Vol.-% Kalktuff besteht.

8. Deckschicht nach Anspruch 7, dadurch gekennzeichnet, daß die aus Torf gewonnene untere Unterdeckschicht mit Myzel eingesät ist und vorteilhafterweise auf seiner oberen Oberfläche einen zusätzlichen Auftrag von Myzel auf Roggenkörnern zeigt.

9. Verfahren zur Herstellung einer Deckschicht nach einem der Ansprüche 1 bis 8, dadurch gekennzeichnet, daß man
- den Puder aus hydraulischem Binder, insbesondere aus Gips, mit einem angemessenen Volumen Wasser mischt, dann
- den erhaltenen flüssigen hydraulischen Binder auf einer unteren Unterdeckschicht ausbreitet, die vorrangig mit Mzyel eingesät ist, dann
- ggf. die solchermaßen gebildete Schicht aus hydraulischem Binder glättet, dann
- die Schicht aus hydraulischem Binder trocknen läßt, um sie auszuhärten, danach, schließlich,
- die notwendigen Räume, vor oder nach dem vollständigen Aushärten der Schicht aus flüssigem Binder, formt.

10. Verfahren zur Zucht und Ernte von Pilzen, insbesondere von Zuchtchampignons Agaricus bisporus, dadurch gekennzeichnet, daß man
- eine Schicht aus Kompost herstellt, die mit Myzel eingesät ist,
- eine aus Torf hergestellte und mit Myzel eingesäte untere Unterdeckschicht herstellt, von einer Stärke, die zwischen 2 cm und 5 cm enthalten ist, bevorzugt von etwa 3 cm, die man auf die Schicht aus Kompost auflegt,
- auf der unteren Unterdeckschicht eine obere Deckschicht, wie in einem der Ansprüche 1 bis 8 definiert, nach dem Verfahren nach Anspruch 9 anordnet,
- den erhaltenen Nährboden so inkubieren läßt, daß das Myzel in die Deckschicht eindringt,
- unter Bildung von Primordien auf der Oberfläche der Deckschicht fruchten läßt, dann die Fruchtkörper sich entwickeln läßt, und, schließlich,
- die erhaltenen Pilz ohne eines jeglichen Restes an Deckschicht erntet.
